# EUROPEAN PATENT SPECIFICATION

(11) **EP 4 524 775 B1**
(45) Date of publication and mention of the grant of the patent: **28.10.2026**
(21) Application number: 23870004.1
(22) Date of filing: 08.08.2023
(51) Int. Cl.: G06F 16/9535, G06F 16/9537, G06F 21/62, G06F 9/54

(54) **SERVICE PROCESSING METHOD AND APPARATUS, STORAGE MEDIUM, AND ELECTRONIC DEVICE**
DIENSTVERARBEITUNGSVERFAHREN UND -VORRICHTUNG, SPEICHERMEDIUM UND ELEKTRONISCHE VORRICHTUNG
PROCÉDÉ ET APPAREIL DE TRAITEMENT DE SERVICE, SUPPORT DE STOCKAGE ET DISPOSITIF ÉLECTRONIQUE

(30) Priority: 30.09.2022 CN 202211216348
(43) Date of publication of application: 19.03.2025
(73) Proprietor: Alipay (Hangzhou) Information Technology Co., Ltd., Hangzhou, Zhejiang 310000 (CN)
(72) Inventor: GU, Wanyu, Hangzhou, Zhejiang 310000 (CN); XIN, Zhi, Hangzhou, Zhejiang 310000 (CN)
(74) Representative: Fish & Richardson P.C.
(86) International application number: PCT/CN2023/111844
(87) International publication number: WO 2024/066758

(56) References cited:
- CN-A- 113 079 200
- CN-A- 114 896 603
- CN-A- 115 525 828
- US-A1- 2021 297 494
- US-A1- 2021 367 980

## Description

### TECHNICAL FIELD

This specification relates to the field of Internet technologies, and in particular, to service processing methods and apparatuses, storage media, and electronic devices.

### BACKGROUND

With continuous development of computer technologies, artificial intelligence technologies have been gradually applied to technical fields such as unmanned driving, information recommendation, smart home, and privacy data protection. By using artificial intelligence technologies, results that satisfy user expectations, living habits, or the scope of interest can be obtained, thereby bringing great convenience to people's daily life.

Currently, a model obtained by using artificial intelligence technologies can be applied to a service execution process of a user, so as to facilitate service execution of the user. A specific process is as follows: A terminal device inputs service data in a client device to the model, and then the model performs data processing on the service data, and outputs a data processing result, so as to perform service processing according to the data processing result. However, in a related technology, a data processing result output by a model is often relatively low in accuracy.

US 2021/297494 A1 describes a method and associated system for providing artificial intelligence (AI) services. The method includes receiving an unfulfilled AI service request from a user interacting application operating on an operating system of a first user device. If the first AI service module in the first user device can process the unfulfilled request, processing the unfulfilled service request to generate and provide a fulfilled request and to the user interacting application. If the first AI service module cannot process the unfulfilled request, then transmitting the unfulfilled request to a second device with a second service module or a cloud AI service module generate a fulfilled AI service request. Then, transmitting the fulfilled AI service request to the user device, then to the user interacting application. The AI modules may operate across many different operating systems and types of devices. Updates from one AI modules may be pushed to other AI modules.

### SUMMARY

The invention is defined by the appended claims. This specification provides service processing methods and apparatuses, so as to, at least in part, address the above-mentioned issues.

This specification uses the following technical solutions: This specification provides a service processing method, including: obtaining a data processing request from a client device; transmitting service data carried in the data processing request to a system layer of a terminal device, so as to determine, in the system layer, system data that match the service data; inputting the service data and the system data into a data processing model pre-deployed in the system layer in the terminal device, so the data processing model performs data processing on the service data and the system data to obtain a data processing result; and obtaining the data processing result from the system layer, so the client device performs service processing according to the data processing result.

Optionally, the pre-deploying the data processing model in the system layer specifically includes: obtaining, in response to a system update of the terminal device, a data packet used for the system update, where the data packet includes model data of the data processing model; and updating a system in the terminal device according to the data packet to deploy the data processing model in the system layer in the terminal device.

The method further includes: obtaining sample data, where the sample data include sample service data and sample system data that match the sample service data; inputting the sample data into a data processing model to be trained to obtain a result to be optimized; obtaining a standard result corresponding to the sample data from a server, and transmitting the standard result to the system layer; and training the data processing model with an optimization objective of minimizing a deviation between the standard result and the result to be optimized.

Optionally, a secure environment is disposed in the system layer of the terminal device, the secure environment is mutually data isolated from another system environment of the terminal device, and the data processing model is deployed in the secure environment.

This specification provides a service processing apparatus, including: a receiving module, configured to obtain a data processing request from a client device; an input module, configured to transmit service data carried in the data processing request to a system layer of the apparatus, so as to determine, in the system layer, system data that match the service data; a data processing module, configured to input the service data and the system data into a data processing model pre-deployed in the system layer in the apparatus, so the data processing model performs data processing on the service data and the system data to obtain a data processing result; and a service processing module, configured to obtain the data processing result from the system layer, so the client device performs service processing according to the data processing result.

Optionally, the apparatus further includes a deployment module, configured to obtain, in response to a system update of the apparatus, a data packet used for the system update, where the data packet includes model data of the data processing model; and update a system in the apparatus according to the data packet to deploy the data processing model in the system layer in the apparatus.

The apparatus further includes a training module, configured to: input sample data into a data processing model to be trained to obtain a result to be optimized; obtain a standard result corresponding to the sample data from a server, and transmit the standard result to the system layer; and train the data processing model with an optimization objective of minimizing a deviation between the standard result and the result to be optimized. The sample data include sample service data and sample system data that match the sample service data.

This specification provides a computer-readable storage medium. The storage medium stores a computer program, and when the computer program is executed by a processor, the above-mentioned service processing method is implemented.

This specification provides an electronic device, including a memory, a processor, and a computer program that is stored in the memory and can run on the processor. When the processor executes the program, the above-mentioned service processing method is implemented.

The above-mentioned at least one technical solution used in this specification can achieve the following beneficial effects: In the service processing method provided in this specification, a data processing request from a client device is obtained, and service data carried in the data processing request are transmitted to a system layer in a terminal device, so as to determine, in the system layer, system data that match the service data. The service data and the system data are input into a data processing model pre-deployed in the system layer in the terminal device, so the data processing model performs data processing on the service data and the system data to obtain a data processing result, and then the data processing result is obtained from the system layer, so the client device performs service processing according to the data processing result.

It can be seen from the above-mentioned method that, in the data processing process of the data processing model in this specification, in addition to the service data, the related system data are used, so the data processing result can be more accurate. In addition, because the data processing model is deployed in the system layer, the entire data processing process is securely performed in the system layer. In addition, even if the service data or the system data contain privacy data of a user, after data processing by the data processing model in the system layer, the data processing result obtained by the data processing model no longer involves the privacy data of the user, thereby ensuring security of user data.

### BRIEF DESCRIPTION OF DRAWINGS

The accompanying drawings described here are used to provide a further understanding of this specification, and constitute a part of this specification. Example embodiments of this specification and descriptions of the embodiments are used to explain this specification, and do not constitute an inappropriate limitation on this specification.
FIG. 1 is a schematic flowchart illustrating a service processing method, according to this specification.
FIG. 2 is a schematic diagram illustrating a running manner of a terminal device of a service processing method, according to this specification.
FIG. 3 is a schematic diagram illustrating a service processing apparatus, according to this specification.
FIG. 4 is a schematic structural diagram illustrating service processing corresponding to FIG. 1, according to this specification.

### DESCRIPTION OF EMBODIMENTS

To make the objectives, technical solutions, and advantages of this specification clearer, the following clearly and comprehensively describes the technical solutions of this specification with reference to specific embodiments of this specification and corresponding accompanying drawings. It is clear that the described embodiments are merely some but not all of embodiments of this specification.

The following describes in detail the technical solutions provided in embodiments of this specification with reference to the accompanying drawings.

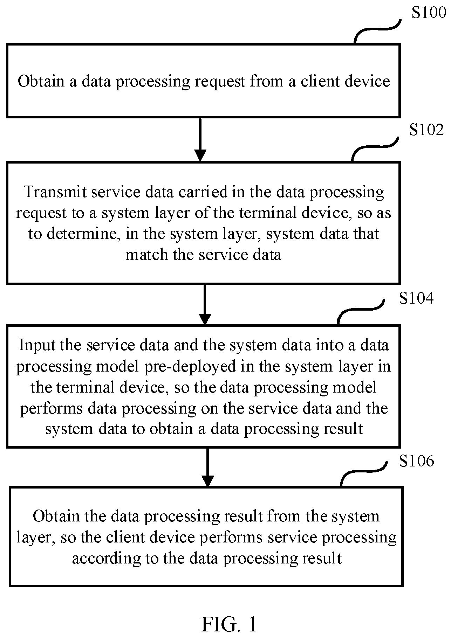

FIG. 1 is a schematic flowchart illustrating a service processing method, according to this specification, including step S100 to step S106.

S100: Obtain a data processing request from a client device.

A terminal device in this specification includes layers such as a hardware layer, an application layer, and a system layer. However, this specification mainly relates to the application layer and the system layer. The application layer provides an interaction service for an application program, has a user interface function of network transmission, and is mainly responsible for implementing interaction between a user and an application program, or communication between application programs. A client device that can be used to perform service processing is deployed in the application layer. The system layer mainly manages resources used by device hardware and software, and provides native code. A data processing model that can be used to perform data processing is deployed in the system layer. In addition, the service processing method involved in this specification can be executed by a terminal device such as a desktop computer, a laptop computer, a tablet computer, or a mobile phone. The following describes the service processing method in the embodiments of this specification.

In a specific implementation of this specification, the data processing request from the client device is first obtained. Specifically, when it is detected that a user performs a service execution operation based on the client device, the client device generates a corresponding service instruction in response to the operation, and executes the service instruction, so as to generate corresponding service data in a process of executing the service execution instruction, and generate a corresponding data processing request according to the service data. Because the client device is deployed at the application layer of the terminal device, the terminal device can obtain the data processing request.

For different services, data processing requests are also different. For example, for a risk control service, a corresponding data processing request can be generated according to service data such as a credit record of the user, and for an information recommendation service, a corresponding data processing request can be generated according to service data such as a user browsing record, data used to represent a user operation habit (that is, average click count and average page view duration), and attribute data authorized by the user (such as the age and gender of the user). This specification sets no limitation on the data processing request, and a specific form and a specific usage scenario of service data subsequently mentioned. It should be emphasized that the service data mentioned in this specification refer to data that can be obtained only after being authorized by the user. That is, for service data not authorized by the user (that is, service data the user does not allow the client device or the terminal device to obtain), the client device or the terminal does not obtain corresponding data.

S102: Transmit service data carried in the data processing request to a system layer of the terminal device, so as to determine, in the system layer, system data that match the service data.

In this specification, in addition to applying the service data carried in the data processing request, the system data that match the service data processing can be used in the data processing process, thereby improving data processing result accuracy and providing a better service for the user. However, the system data are only stored in the system layer and should not be arbitrarily leaked. Therefore, to properly apply the system data, the service data carried in the data processing request can be transferred to the system layer. Subsequently, the system layer performs data processing with reference to the system data and the service data, and obtains a data processing result.

After the service data carried in the data processing request are transferred to the system layer, because there is a large quantity of data in the system layer, some system data are applicable to a service corresponding to the service data, and some system data are not applicable, the system data that match the service data need to be determined.

A specific matching relationship between the service data and the system data mainly depends on a service association between the service data and the system data. A specific matching can be matching according to a service feature. For example, for an information recommendation service, service data can be information such as preferences, age, and history browsing record of the user, and the user may have different demand preferences for information in different geographic locations. Therefore, if data of a current geographic location of the user are used in the data processing process, data processing result accuracy can improved. System data that match the service data can be GPS positioning information.

S104: Input the service data and the system data into a data processing model pre-deployed in the system layer in the terminal device, so the data processing model performs data processing on the service data and the system data to obtain a data processing result.

In this specification, once the system data that match the service data are determined, the system data and the service data can be input into the data processing model for data processing, to obtain the data processing result.

The data processing model is pre-deployed in the system layer, and a deployment manner can be deployment with system update of the terminal device.

Specifically, in response to a system update request of the terminal device, the terminal device can obtain a system update data packet, where the data packet includes model data of the data processing model. Therefore, system update can be performed by installing the data packet. In addition, at the same time of system update, an engine deployed in the system layer of the terminal device can automatically deploy the data processing model in the system layer of the terminal device based on the model data.

In addition to the above-mentioned model deployment manner, the data processing model can be deployed in the system layer of the terminal device before factory delivery of the terminal device, so the terminal device has the data processing model deployed in the system layer at the factory state.

In this specification, data processing results are also different for different services. For example, for a risk control service, a corresponding data processing result can be a score on security (that is, after the service data and the system data are input into the data processing model, the data processing model can perform service risk control on the user according to the service data and the system data, and output a corresponding security score). A higher score indicates higher security, and a lower score indicates a greater risk of a current operation of the user.

For an information recommendation service, a corresponding data processing result can be a score of recommendation information (that is, after the service data and the system data are input into the data processing model, the data processing model can separately determine a recommendation score of each piece of information to be recommended according to the service data and the system data). A higher score indicates a higher degree of interest of the user in the information to be recommended, and a higher probability of tapping the information to be recommended by the user; and a lower score indicates a lower degree of interest of the user in the information to be recommended, and a lower probability of tapping the information to be recommended by the user.

It can be understood from the above-mentioned content that, after the service data and the system data are input into the data processing model, the obtained data processing result is only an evaluation result, and does not involve user privacy. In addition, the entire data processing process is completed in the system layer. Therefore, finally, the data processing result output from the system layer to the application layer does not involve user privacy. Therefore, in this specification, the system data can be properly used for data processing, thereby improving data processing result accuracy and ensuring security of user data.

S106: Obtain the data processing result from the system layer, so the client device performs service processing according to the data processing result.

Because the entire data processing process is completed in the system layer and service processing is completed in the client device, after the data processing result is obtained, the data processing result in the system layer needs to be sent to the client device, so the client device performs service processing according to the data processing result.

It can be understood that in this specification, not only the service data are used in the data processing process, but also the related system data are used, thereby ensuring precision of the data processing result. In addition, the entire data processing process is securely performed in the system layer. Therefore, even if the service data or the system data contain privacy data of the user, after data processing by the data processing model in the system layer, the data processing result obtained thereby does not involve the privacy data of the user, thereby ensuring security of user data.

In addition, to further ensure security of user data, the data processing model in this specification can be deployed in a secure environment in the system layer, and the secure environment is mutually data-isolated from another system environment of the terminal device. The secure environment mentioned here can be a system environment such as a trusted execution environment (TEE).

In addition, to further improve accuracy of the data processing result, the data processing model can be trained. Training of the data processing model can be local training, that is, training is performed in the terminal device. A specific training process can be: using the service data and the system data that match the service data as sample data (the service data and the system data here can be stored in the terminal device when service processing is performed previously), and inputting the sample data into a data processing model to be trained to obtain a result to be optimized. Furthermore, the terminal device can also obtain a standard result corresponding to the sample data from the server, and further train the data processing model with an optimization objective of minimizing a deviation between the standard result and the result to be optimized.

Certainly, in this specification, training of the data processing model can alternatively be performed on a server side, that is, training is performed on the server. A training process of the data processing model can be as follows: The server first determines sample data, and inputs the sample data into a data processing model to be trained to obtain a result to be optimized. Before this, the server needs to further determine a standard result corresponding to the sample data. Then, the server can train the data processing model with an optimization objective of minimizing a deviation between the standard result and the result to be optimized.

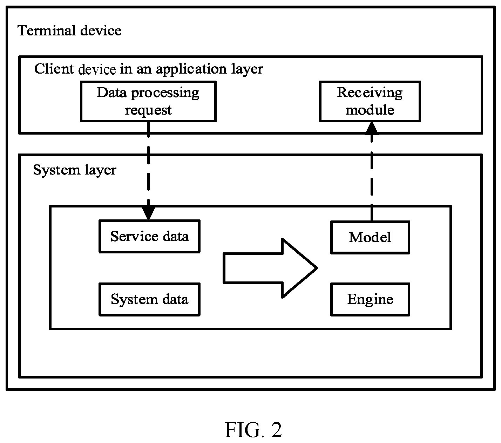

For ease of understanding, the following provides a general description of a service processing method provided in this specification, as shown in FIG. 2.

FIG. 2 is a schematic diagram illustrating a running manner of a terminal device of a service processing method, according to this specification, which specifically includes the following content: A terminal device shown in FIG. 2 includes an application layer and a system layer, where a client device is installed in the application layer, and a data processing model and an engine are deployed in the application layer of the terminal device, where the data processing model is pre-deployed in the system layer. A specific deployment manner is as follows: When the terminal device receives an installation package for system update, when system update is performed according to the installation package, the engine deployed in the system layer parses out model data in the installation package, so as to complete deployment of the data processing model in the system layer.

In a specific service processing process, when the terminal device detects a service processing operation of a user based on the client device, the terminal device can generate or obtain service data. Afterwards, the client device generates a data processing request according to service data, sends the data processing request that carries the service data to the system layer, and determines, in the system layer, system data that match the service data. Afterwards, the terminal device can send the service data and the system data to the data processing model pre-deployed in the system layer for data processing, and transfer a generated data processing result from the system layer to the application layer. The client device receives the data processing result by using a predetermined receiving module, and performs service processing according to the data processing result.

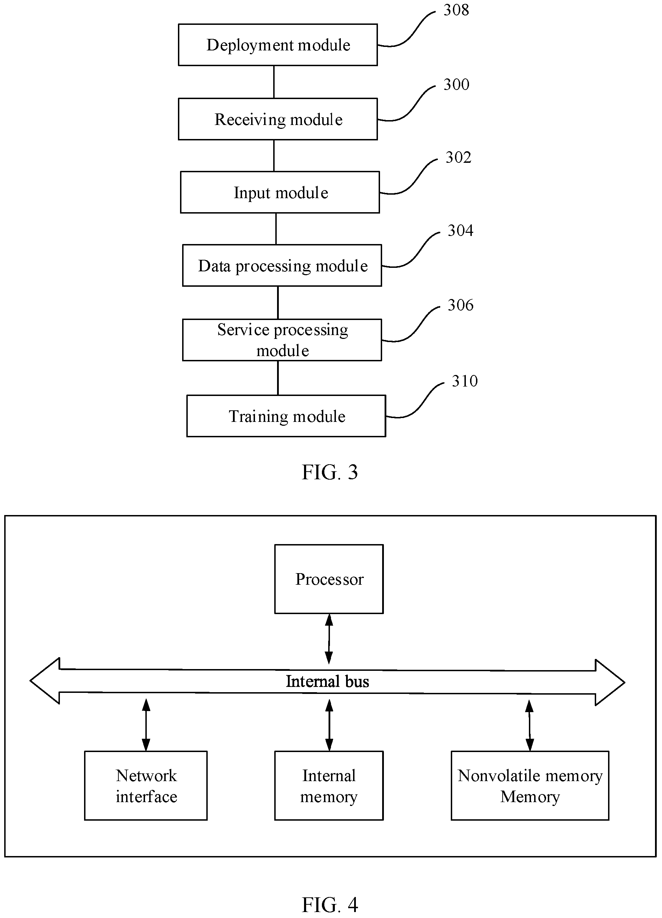

The service processing method provided in one or more embodiments of this specification is described above. Based on the same idea, this specification further provides a corresponding service processing apparatus, as shown in FIG. 3.

FIG. 3 is a schematic diagram illustrating a service processing apparatus, according to this specification, which specifically includes: a receiving module 300, configured to obtain a data processing request from a client device; an input module 302, configured to transmit service data carried in the data processing request to a system layer of the apparatus, so as to determine, in the system layer, system data that match the service data; a data processing module 304, configured to input the service data and the system data into a data processing model pre-deployed in the system layer in the apparatus, so the data processing model performs data processing on the service data and the system data to obtain a data processing result; and a service processing module 306, configured to obtain the data processing result from the system layer, so the client device performs service processing according to the data processing result. Optionally, the apparatus further includes a deployment module 308, configured to obtain, in response to a system update of the apparatus, a data packet used for the system update, where the data packet includes model data of the data processing model; and update a system in the apparatus according to the data packet to deploy the data processing model in the system layer in the apparatus.

Optionally, the apparatus further includes a training module 310, configured to: input sample data into a data processing model to be trained to obtain a result to be optimized; obtain a standard result corresponding to the sample data from a server, and transmit the standard result to the system layer; and train the data processing model with an optimization objective of minimizing a deviation between the standard result and the result to be optimized.

Optionally, a secure environment is disposed in the system layer of the apparatus, the secure environment is mutually data isolated from another system environment of the apparatus, and the data processing model is deployed in the secure environment.

This specification further provides a computer-readable storage medium. The storage medium stores a computer program, and the computer program can be configured to perform the above-mentioned service processing method provided in FIG. 1.

This specification further provides a schematic structural diagram illustrating an electronic device shown in FIG. 4. As shown in FIG. 4, in terms of hardware, the electronic device includes a processor, an internal bus, a network interface, a memory, and a nonvolatile memory, and certainly may further include hardware needed by another service. The processor reads a corresponding computer program from the non-volatile memory into the memory and runs the computer program, to implement the above-mentioned service processing method in FIG. 1. Certainly, in addition to a software implementation, this specification does not rule out another implementation, for example, a logic component or a combination of software and hardware. To be specific, an execution body of the following processing procedure is not limited to each logical unit, and can be hardware or a logical component.

In the 1990s, whether improvement to a technology is hardware improvement (for example, improvement to a circuit structure like a diode, a transistor, or a switch) or software improvement (improvement to a method procedure) can be clearly identified. However, with development of technologies, improvement to many existing method procedures can be considered as direct improvement to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer independently performs programming to "integrate" a digital system to a PLD without requesting a chip manufacturer to design and manufacture an application-specific integrated circuit chip. In addition, at present, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. The storage controller can also be implemented as a part of the control logic of the storage. A person skilled in the art also knows that, in addition to implementing the controller by using only computer-readable program code, logic programming can be performed on a method step, so the controller implements a same function in a form of a logic gate, a switch, an application-specific integrated circuit, a programmable logic controller, an embedded microcontroller, etc. Therefore, the controller can be considered as a hardware component, and an apparatus included in the controller and configured to implement various functions can also be considered as a structure in the hardware component. Or the apparatus configured to implement various functions can even be considered as both a software module implementing the method and a structure in the hardware component.

The system, apparatus, module, or unit illustrated in the above-mentioned embodiments can be specifically implemented by using a computer chip or an entity, or can be implemented by using a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, during implementation of this specification, functions of units can be implemented in the same or more software or hardware.

A person skilled in the art should understand that embodiments of this application can be provided as a method, a system, or a computer program product. Therefore, this specification can use a form of hardware only embodiments, software only embodiments, or embodiments with a combination of software and hardware. Moreover, a form of a computer program product that is implemented on one or more computer-usable storage media (including but not limited to a disk memory, a CD-ROM, an optical memory, etc.) that contain computer-usable program code can be used in this specification.

This specification is described with reference to the flowcharts and/or block diagrams of the method, the device (system), and the computer program product based on the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided to a processor of a general-purpose computer, a dedicated computer, an embedded processor, or other programmable data processing device to produce a machine, such that instructions executed by a processor of a computer or other programmable data processing device produce an apparatus for implementing a function specified in one or more processes of the flowchart and/or one or more blocks of the block diagram.

These computer program instructions can also be stored in a computer readable memory that can instruct a computer or another programmable data processing device to work in a specific manner, so an instruction stored in the computer readable memory generates a manufacturer including an instruction apparatus, and the instruction apparatus implements a function specified in one or more procedures of a flowchart and/or one or more blocks of a block diagram.

These computer program instructions can be loaded onto the computer or another programmable data processing device, so a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), an input/output interface, a network interface, and a memory.

The memory may include a non-persistent storage, a random access memory (RAM), and/or a nonvolatile memory in a computer-readable medium, for example, a read-only memory (ROM) or a flash read-only memory (flash RAM). The memory is an example of the computer-readable medium.

The computer-readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD) or another optical storage, a cassette tape, a cassette magnetic disk storage, or another magnetic storage device, or any other non-transmission media, which can be configured to store information that can be accessed by a computing device. Based on the definition in this specification, the computer-readable medium does not include transitory media such as a modulated data signal and carrier.

It is worthwhile to further note that the terms "include", "contain", or any other variant thereof are intended to cover a non-exclusive inclusion, so a process, a method, a product, or a device that includes a list of elements not only includes those elements but also includes other elements which are not expressly listed, or further includes elements inherent to such process, method, product, or device. Without more constraints, an element preceded by "includes a ... " does not preclude the existence of additional identical elements in the process, method, product, or device that includes the element.

A person skilled in the art should understand that some embodiments of this specification can be provided as methods, systems, or computer program products. Therefore, a form of hardware only embodiments, software only embodiments, or embodiments with a combination of software and hardware can be used in this specification. In addition, this specification can be in a form of a computer program product implemented on one or more computer-usable storage media (including but not limited to a magnetic disk storage, a CD-ROM, an optical storage, etc.) containing computer-usable program code.

This specification can be described in a general context of a computer-executable instruction executed by a computer, for example, a program module. Typically, program modules include routines, programs, objects, components, data structures, etc. that perform specific tasks or implement specific abstract data types. This specification can also be practiced in a distributed computing environment in which tasks are performed by remote processing devices connected via a communication network. In the distributed computing environment, a program module can be located in local and remote computer storage media including a storage device.

Embodiments in this specification are all described in a progressive manner, for same or similar parts in embodiments, mutual reference can be made to these embodiments, and each embodiment focuses on a difference from other embodiments. Particularly, the system embodiments are basically similar to the method embodiments, and therefore are described briefly. For related parts, references can be made to some descriptions in the method embodiments.

The above-mentioned descriptions are merely some embodiments of this specification and are not intended to limit this specification.

## Claims

1. A service processing method, wherein the method is applied to a terminal device, and a client device used to perform a service is installed at an application layer in the terminal device, and the method comprises:
obtaining sample data, wherein the sample data comprise sample service data and sample system data that match the sample service data;
inputting the sample data into a data processing model to be trained to obtain a result to be optimized;
obtaining a standard result corresponding to the sample data from a server, and transmitting the standard result to the system layer; and
training the data processing model with an optimization objective of minimizing a deviation between the standard result and the result to be optimized;
obtaining (S100) a data processing request from the client device;
transmitting (S102) service data carried in the data processing request to a system layer of the terminal device, so as to determine, in the system layer, system data that match the service data;
inputting (S104) the service data and the system data into the data processing model, so the data processing model performs data processing on the service data and the system data to obtain a data processing result, wherein the data processing model is pre-deployed in the system layer in the terminal device; and
obtaining (S106) the data processing result from the system layer, so the client device performs service processing according to the data processing result.

2. The method according to claim 1, wherein pre-deploying the data processing model in the system layer comprises:
obtaining, in response to a system update of the terminal device, a data packet used for the system update, wherein the data packet comprises model data of the data processing model; and
updating a system in the terminal device according to the data packet to deploy the data processing model in the system layer in the terminal device.

3. The method according to claim 1, wherein a secure environment is disposed in the system layer of the terminal device, the secure environment is mutually data isolated from another system environment of the terminal device, and the data processing model is deployed in the secure environment.

4. A service processing apparatus, wherein a client device used to perform a service is installed at an application layer in the apparatus, and the apparatus comprises:
a training module (310), configured to
input sample data into a data processing model to be trained to obtain a result to be optimized, wherein the sample data comprise sample service data and sample system data that match the sample service data,
obtain a standard result corresponding to the sample data from a server, and transmit the standard result to the system layer, and
train the data processing model with an optimization objective of minimizing a deviation between the standard result and the result to be optimized;
a receiving module (300), configured to obtain (S100) a data processing request from the client device;
an input module (302), configured to transmit (S102) service data carried in the data processing request to a system layer of the apparatus, so as to determine, in the system layer, system data that match the service data;
a data processing module (304), configured to input (S104) the service data and the system data into the data processing model, so the data processing model performs data processing on the service data and the system data to obtain a data processing result, wherein the data processing model is pre-deployed in the system layer in the apparatus; and
a service processing module (306), configured to obtain (S106) the data processing result from the system layer, so the client device performs service processing according to the data processing result.

5. The apparatus according to claim 4, wherein the apparatus further comprises:
a deployment module (308), configured to obtain, in response to a system update of the apparatus, a data packet used for the system update, wherein the data packet comprises model data of the data processing model; and update a system in the apparatus according to the data packet to deploy the data processing model in the system layer in the apparatus.

6. The apparatus according to claim 4, wherein a secure environment is disposed in the system layer of the apparatus, the secure environment is mutually data isolated from another system environment of the apparatus, and the data processing model is deployed in the secure environment.

7. A computer-readable storage medium, wherein the storage medium stores a computer program, and the computer program is executed by a processor to implement the method according to any one of claims 1 to 3.

## Patentansprüche

1. Ein Dienstverarbeitungsverfahren, wobei das Verfahren auf ein Endgerät angewendet wird und ein Client-Gerät, das zum Ausführen eines Dienstes verwendet wird, auf einer Anwendungsschicht in dem Endgerät installiert ist, und wobei das Verfahren umfasst:
Erhalten von Musterdaten, wobei die Musterdaten Musterdienstdaten und Mustersystemdaten umfassen, die mit den Musterdienstdaten übereinstimmen;
Eingeben der Musterdaten in ein zu trainierendes Datenverarbeitungsmodell, um ein zu optimierendes Ergebnis zu erhalten;
Erhalten eines den Musterdaten entsprechenden Standardergebnisses von einem Server und Übertragen des Standardergebnisses an die Systemschicht; und
Trainieren des Datenverarbeitungsmodells mit einem Optimierungsziel des Minimierens einer Abweichung zwischen dem Standardergebnis und dem zu optimierenden Ergebnis;
Erhalten (S100) einer Datenverarbeitungsanforderung von dem Client-Gerät;
Übertragen (S102) von in der Datenverarbeitungsanforderung enthaltenen Dienstdaten an eine Systemschicht des Endgeräts, um in der Systemschicht Systemdaten zu bestimmen, die mit den Dienstdaten übereinstimmen;
Eingeben (S104) der Dienstdaten und der Systemdaten in das Datenverarbeitungsmodell, sodass das Datenverarbeitungsmodell eine Datenverarbeitung an den Dienstdaten und den Systemdaten durchführt, um ein Datenverarbeitungsergebnis zu erhalten, wobei das Datenverarbeitungsmodell in der Systemschicht in dem Endgerät vorab bereitgestellt ist; und
Erhalten (S106) des Datenverarbeitungsergebnisses von der Systemschicht, sodass das Client-Gerät eine Dienstverarbeitung gemäß dem Datenverarbeitungsergebnis durchführt.

2. Verfahren nach Anspruch 1, wobei das Vorabbereitstellen des Datenverarbeitungsmodells in der Systemschicht Folgendes umfasst:
Erhalten, als Reaktion auf eine Systemaktualisierung des Endgeräts, eines für die Systemaktualisierung verwendeten Datenpakets, wobei das Datenpaket Modelldaten des Datenverarbeitungsmodells umfasst; und
Aktualisieren eines Systems in dem Endgerät gemäß dem Datenpaket, um das Datenverarbeitungsmodell in der Systemschicht in dem Endgerät bereitzustellen.

3. Verfahren nach Anspruch 1, wobei eine sichere Umgebung in der Systemschicht des Endgeräts eingerichtet ist, wobei die sichere Umgebung gegenüber einer anderen Systemumgebung des Endgeräts hinsichtlich der Daten gegenseitig isoliert ist und wobei das Datenverarbeitungsmodell in der sicheren Umgebung bereitgestellt ist.

4. Eine Dienstverarbeitungsvorrichtung, wobei ein Client-Gerät, das zum Ausführen eines Dienstes verwendet wird, auf einer Anwendungsschicht in der Vorrichtung installiert ist, und wobei die Vorrichtung umfasst:
ein Trainingsmodul (310), das dazu konfiguriert ist,
Musterdaten in ein zu trainierendes Datenverarbeitungsmodell einzugeben, um ein zu optimierendes Ergebnis zu erhalten, wobei die Musterdaten Musterdienstdaten und Mustersystemdaten umfassen, die mit den Musterdienstdaten übereinstimmen,
ein den Musterdaten entsprechendes Standardergebnis von einem Server zu erhalten und das Standardergebnis an die Systemschicht zu übertragen, und
das Datenverarbeitungsmodell mit einem Optimierungsziel des Minimierens einer Abweichung zwischen dem Standardergebnis und dem zu optimierenden Ergebnis zu trainieren;
ein Empfangsmodul (300), das dazu konfiguriert ist, eine Datenverarbeitungsanforderung von dem Client-Gerät zu erhalten (S100);
ein Eingabemodul (302), das dazu konfiguriert ist, in der Datenverarbeitungsanforderung enthaltene Dienstdaten an eine Systemschicht der Vorrichtung zu übertragen (S102), um in der Systemschicht Systemdaten zu bestimmen, die mit den Dienstdaten übereinstimmen;
ein Datenverarbeitungsmodul (304), das dazu konfiguriert ist, die Dienstdaten und die Systemdaten in das Datenverarbeitungsmodell einzugeben (S104), sodass das Datenverarbeitungsmodell eine Datenverarbeitung an den Dienstdaten und den Systemdaten durchführt, um ein Datenverarbeitungsergebnis zu erhalten, wobei das Datenverarbeitungsmodell in der Systemschicht in der Vorrichtung vorab bereitgestellt ist;
und ein Dienstverarbeitungsmodul (306), das dazu konfiguriert ist, das Datenverarbeitungsergebnis von der Systemschicht zu erhalten (S106), sodass das Client-Gerät eine Dienstverarbeitung gemäß dem Datenverarbeitungsergebnis durchführt.

5. Vorrichtung nach Anspruch 4, wobei die Vorrichtung ferner umfasst:
ein Bereitstellungsmodul (308), das dazu konfiguriert ist, als Reaktion auf eine Systemaktualisierung der Vorrichtung ein für die Systemaktualisierung verwendetes Datenpaket zu erhalten, wobei das Datenpaket Modelldaten des Datenverarbeitungsmodells umfasst; und ein System in der Vorrichtung gemäß dem Datenpaket zu aktualisieren, um das Datenverarbeitungsmodell in der Systemschicht in der Vorrichtung bereitzustellen.

6. Vorrichtung nach Anspruch 4, wobei eine sichere Umgebung in der Systemschicht der Vorrichtung eingerichtet ist, wobei die sichere Umgebung gegenüber einer anderen Systemumgebung der Vorrichtung hinsichtlich der Daten gegenseitig isoliert ist und wobei das Datenverarbeitungsmodell in der sicheren Umgebung bereitgestellt ist.

7. Ein computerlesbares Speichermedium, wobei das Speichermedium ein Computerprogramm speichert und das Computerprogramm von einem Prozessor ausgeführt wird, um das Verfahren nach einem der Ansprüche 1 bis 3 zu implementieren.

## Revendications

1. Procédé de traitement de service, dans lequel le procédé est appliqué à un dispositif terminal, et un dispositif client utilisé pour mettre en œuvre un service est installé au niveau d'une couche application du dispositif terminal, et le procédé comprend :
l'obtention de données d'échantillon, les données d'échantillon comprenant des données de service d'échantillon et des données de système d'échantillon qui correspondent aux données de service d'échantillon ;
l'introduction des données d'échantillon dans un modèle de traitement de données à entraîner afin d'obtenir un résultat à optimiser ;
l'obtention d'un résultat standard correspondant aux données d'échantillon à partir d'un serveur, et la transmission du résultat standard à la couche système ; et
l'entraînement du modèle de traitement de données avec un objectif d'optimisation consistant à minimiser un écart entre le résultat standard et le résultat à optimiser ;
l'obtention (S100) d'une demande de traitement de données auprès du dispositif client ;
la transmission (S102) de données de service transportées dans la demande de traitement de données à une couche système du dispositif terminal, de manière à déterminer, dans la couche système, des données de système correspondant aux données de service ;
l'introduction (S104) des données de service et des données de système dans le modèle de traitement de données, de sorte que le modèle de traitement de données effectue un traitement de données sur les données de service et les données de système afin d'obtenir un résultat de traitement de données, le modèle de traitement de données étant pré-déployé dans la couche système du dispositif terminal ; et
l'obtention (S106) du résultat de traitement de données à partir de la couche système, de sorte que le dispositif client effectue un traitement de service conformément au résultat de traitement de données.

2. Procédé selon la revendication 1, dans lequel le pré-déploiement du modèle de traitement de données dans la couche système comprend :
l'obtention, en réponse à une mise à jour système du dispositif terminal, d'un paquet de données utilisé pour la mise à jour système, le paquet de données comprenant des données de modèle du modèle de traitement de données ; et
la mise à jour d'un système dans le dispositif terminal conformément au paquet de données afin de déployer le modèle de traitement de données dans la couche système du dispositif terminal.

3. Procédé selon la revendication 1, dans lequel un environnement sécurisé est disposé dans la couche système du dispositif terminal, l'environnement sécurisé est mutuellement isolé, sur le plan des données, d'un autre environnement système du dispositif terminal, et le modèle de traitement de données étant déployé dans l'environnement sécurisé.

4. Appareil de traitement de service, dans lequel un dispositif client utilisé pour mettre en œuvre un service est installé au niveau d'une couche application de l'appareil, et l'appareil comprend :
un module d'entraînement (310), configuré pour
introduire des données d'échantillon dans un modèle de traitement de données à entraîner afin d'obtenir un résultat à optimiser, les données d'échantillon comprenant des données de service d'échantillon et des données de système d'échantillon qui correspondent aux données de service d'échantillon,
obtenir un résultat standard correspondant aux données d'échantillon à partir d'un serveur, et transmettre le résultat standard à la couche système, et
entraîner le modèle de traitement de données avec un objectif d'optimisation consistant à minimiser un écart entre le résultat standard et le résultat à optimiser ;
un module de réception (300), configuré pour obtenir (S100) une demande de traitement de données auprès du dispositif client ;
un module d'entrée (302), configuré pour transmettre (S102) des données de service transportées dans la demande de traitement de données à une couche système de l'appareil, de manière à déterminer, dans la couche système, des données de système correspondant aux données de service ;
un module de traitement de données (304), configuré pour introduire (S104) les données de service et les données de système dans le modèle de traitement de données, de sorte que le modèle de traitement de données effectue un traitement de données sur les données de service et les données de système afin d'obtenir un résultat de traitement de données, le modèle de traitement de données étant pré-déployé dans la couche système de l'appareil ; et
un module de traitement de service (306), configuré pour obtenir (S106) le résultat de traitement de données à partir de la couche système, de sorte que le dispositif client effectue un traitement de service conformément au résultat de traitement de données.

5. Appareil selon la revendication 4, dans lequel l'appareil comprend en outre :
un module de déploiement (308), configuré pour obtenir, en réponse à une mise à jour système de l'appareil, un paquet de données utilisé pour la mise à jour système, le paquet de données comprenant des données de modèle du modèle de traitement de données, et mettre à jour un système dans l'appareil conformément au paquet de données afin de déployer le modèle de traitement de données dans la couche système de l'appareil.

6. Appareil selon la revendication 4, dans lequel un environnement sécurisé est disposé dans la couche système de l'appareil, l'environnement sécurisé étant mutuellement isolé, sur le plan des données, d'un autre environnement système de l'appareil, et le modèle de traitement de données étant déployé dans l'environnement sécurisé.

7. Support de stockage lisible par ordinateur, le support de stockage stockant un programme informatique, et le programme informatique étant exécuté par un processeur pour mettre en œuvre le procédé selon l'une quelconque des revendications 1 à 3.
